# DEMANDE DE BREVET EUROPEEN

(11) **EP 1 995 118 A1**
(43) Date de publication de la demande: **26.11.2008**
(21) Numéro de dépôt: 08300160.2
(22) Date de dépôt: 27.03.2008
(51) Int. Cl.: B60R 7/02, B60P 7/08

(54) **Agencement d'un dispositif de compartimentage de coffre**

(30) Priorité: 22.05.2007 FR 0755182
(71) Demandeur: Renault, 92109 Boulogne Billancourt (FR)
(72) Inventeur: Brulet, Jean Michel, 92130, ISSY LES MOULINEAUX (FR); Guerlin, Philippe, 91540, MENNECY (FR); Hermer, Gilles, 78600, MAISONS LAFFITTE (FR); Martz, Philippe, 78990, ELANCOURT (FR)

(57) **Abrégé**

Agencement d'un dispositif de compartimentage (10) dans un coffre (12) de véhicule automobile, comportant un tapis (14) recouvrant au moins en partie un plancher (15) du coffre (12) et une paroi de compartimentage (16) montée mobile sur le tapis (14) par l'intermédiaire de charnières (20) entre une position de repos dans laquelle elle escamotée contre le plancher 15 et une position d'utilisation dans laquelle elle est relevée dans un plan transversal, caractérisé en ce que l'agencement comporte des moyens de maintien amovibles (44) d'un bord arrière (40) du tapis (14) sur une barre de seuil (42) du coffre (12), de manière à éviter le soulèvement d'une partie arrière (38) dudit tapis (14).

## Description

L'invention concerne un agencement d'un dispositif de compartimentage dans un coffre de véhicule automobile, comportant un tapis recouvrant au moins en partie un plancher du coffre et une paroi de compartimentage montée mobile sur le tapis par l'intermédiaire de charnières entre une position de repos dans laquelle elle escamotée contre le plancher et une position d'utilisation dans laquelle elle est relevée dans un plan transversal.

Afin d'éviter que des objets disposés sur un plancher de coffre d'un véhicule ne se déplacent pendant que le véhicule roule, il existe des dispositifs de compartimentage de coffre. Cependant, il ne faut pas que ces dispositifs de compartimentage soient trop encombrants lorsqu'un utilisateur veut utiliser toute la place disponible dans le coffre. De plus, il ne faut pas non plus que ces dispositifs présentent une gêne dans l'accès à des éléments situés sous le plancher du coffre.

Par exemple, la publication EP-B-1321335 décrit un dispositif de compartimentage dans lequel un volet transversal et un volet longitudinal sont montés pivotants par l'intermédiaire de charnières sur un tapis de coffre.

Ainsi, lorsque le volet transversal est en position relevée, il est possible de ranger des objets dans le coffre sans qu'ils ne risquent de se déplacer. Cependant, quand il s'agit d'objets lourds, un brusque freinage du véhicule peut entraîner un mouvement desdits objets vers l'avant, qui vont alors pousser le volet transversal, ce qui va induire une contrainte sur le tapis par l'intermédiaire des charnières. Une partie arrière du tapis risque alors de se soulever, ce qui peut entraîner un basculement du dispositif de compartimentage.

Afin de pallier ces inconvénients, l'invention a pour objet un dispositif de compartimentage simple, pratique et sûr, tout en étant peu encombrant lorsqu'il n'est pas utilisé et en permettant l'accès à des éléments situés sous le tapis de coffre.

A cet effet, l'invention propose un agencement d'un dispositif de compartimentage de coffre de véhicule automobile du type cité ci-dessus, caractérisé en ce que l'agencement comporte des moyens de maintien amovibles d'un bord arrière du tapis sur une barre de seuil du coffre, de manière à éviter le soulèvement d'une partie arrière dudit tapis.

Selon d'autres caractéristiques de l'invention:
- Les moyens de maintien sont constitués par au moins un anneau, monté pivotant autour d'un axe transversal porté par la barre de seuil et apte à occuper une première position relevée et une deuxième position rabaissée dans laquelle il est inséré dans un logement de forme complémentaire porté par une pièce fixée sur le bord arrière du tapis, ladite pièce comportant en outre, à l'intérieur du logement, un plot, de manière que, en cas de soulèvement intempestif du bord arrière du tapis, le plot vienne en appui contre l'anneau pour limiter le soulèvement dudit tapis.
- Une encoche de préhension de l'anneau est portée par un bord du logement.
- Les charnières sont des charnières en col de cygne dont une première extrémité est reliée à la paroi de compartimentage et dont une deuxième extrémité est montée à rotation autour d'un axe transversal porté par un support, fixé à une face inférieure du tapis et situé en regard d'une ouverture de passage de la charnière, ménagée dans ledit tapis.
- Le tapis comporte un évidement apte à recevoir la paroi de compartimentage en position de repos, de manière que ledit tapis et ladite paroi forment une surface sensiblement plane.
- L'agencement comporte des moyens de blocage de la paroi de compartimentage en position relevée.
- Le tapis est monté pivotant autour d'un axe transversal situé en avant de la paroi de compartimentage, de manière que des éléments localisés sous le tapis soient accessibles.

D'autres caractéristiques et avantages de l'invention apparaîtront à la lecture de la description d'exemples de réalisation d'un agencement d'un dispositif de compartimentage de coffre en référence aux dessins annexés dans lesquels :
- La figure 1 est une vue en perspective d'un agencement d'un dispositif de compartimentage de coffre selon l'invention, l'agencement étant dans une première configuration dans laquelle ledit dispositif est en position de repos.
- La figure 2 est une vue latérale de l'agencement de la figure 1.
- La figure 3 est une vue latérale de l'agencement de la figure 1, dans une deuxième configuration dans laquelle le dispositif de compartimentage est en position d'utilisation.
- La figure 4 est une vue latérale de l'agencement de la figure 1 dans une troisième configuration, dans laquelle il est possible d'accéder à des éléments situés sous l'agencement.
- La figure 5 est une vue d'un détail de l'agencement de la figure 1.

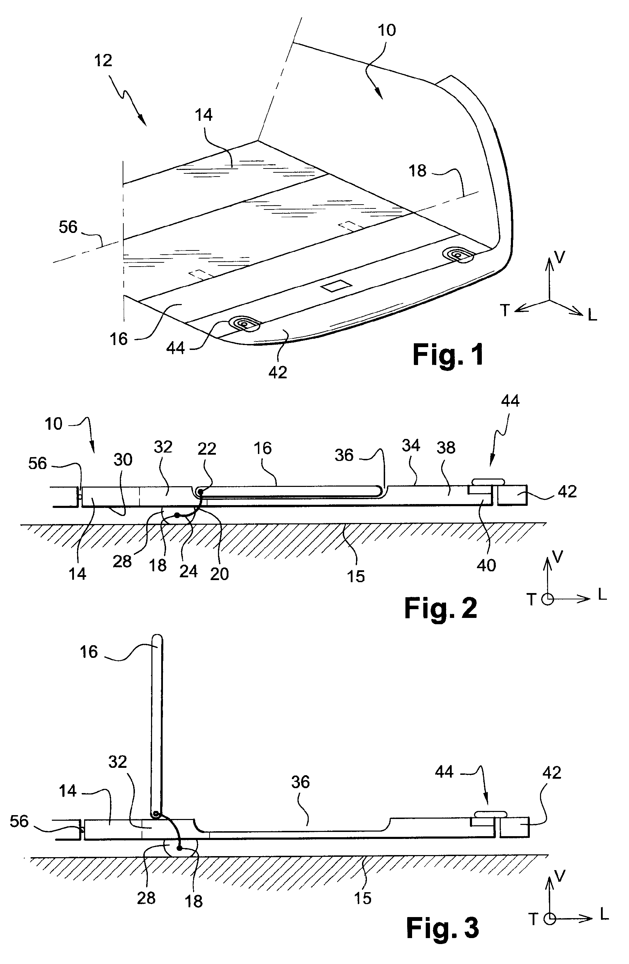

Dans la description qui suit, nous prendrons à titre non limitatif une orientation longitudinale, verticale et transversale indiquée par le trièdre L,V,T des figures 1 à 5.

Des éléments identiques ou analogues sont désignés par les mêmes chiffres de référence.

Tel que représenté à la figure 1, un dispositif de compartimentage 10 est agencé dans un coffre 12 d'un véhicule automobile (non représenté).

Le dispositif de compartimentage 10 comporte un tapis rigide 14, apte à recouvrir au moins en partie un plancher 15 du coffre 12, et une paroi de compartimentage 16.

Tel que représenté aux figures 2 et 3, la paroi de compartimentage 16 est montée à rotation autour d'un axe transversal 18 entre une position de repos dans laquelle elle est escamotée contre le tapis 14 et une position d'utilisation dans laquelle la paroi 16 est relevée de manière qu'elle soit disposée selon un plan transversal.

La paroi de compartimentage 16 est fixée directement sur le tapis de coffre 14 par l'intermédiaire d'au moins deux charnières 20. Les charnières 20 peuvent être des charnières de type « col de cygne », dont une première extrémité 22 est reliée à la paroi 16 et une deuxième extrémité 24 est montée à rotation autour de l'axe transversal 18 porté par un support 28 fixé sur une face inférieure 30 du tapis 14. Le support 28 présente la forme d'un flasque, dont les cloisons latérales portent chacune une extrémité de l'axe 18, situé en regard d'une ouverture 32 (représentée en pointillés) ménagée dans le tapis 14, de manière à laisser passage à la charnière 20.

Des moyens de blocage (non représentés) de la paroi de compartimentage 16 en position relevée peuvent être prévus. Il peut s'agir par exemple de crochets portés par des parois transversales du coffre 12 coopérant avec des moyens de réception portés par la paroi 16.

Une face supérieure 34 du tapis 14 comporte un logement 36 de réception de la paroi 16 lorsqu'elle est en position de repos, de manière que le tapis 14 et la paroi 16 forment une surface sensiblement plane.

Ainsi, lorsque la paroi de compartimentage 16 est en position relevée, il est possible de ranger des objets dans le coffre sans qu'ils ne risquent de se déplacer.

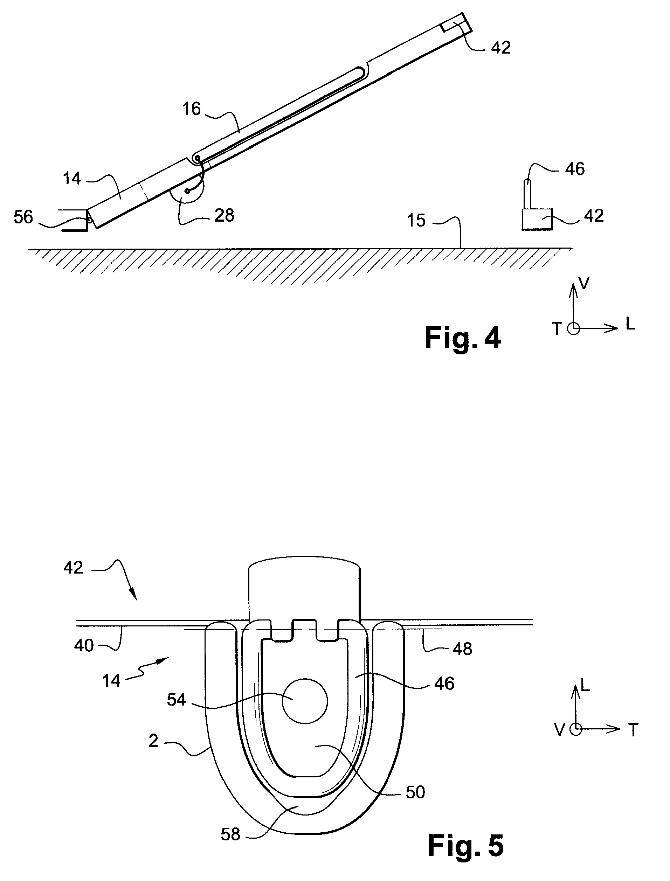

Tel que représenté à la figure 5, pour éviter le soulèvement d'une partie arrière 38 du coffre lorsque, en cas de freinage brusque, un objet lourd pousse sur la paroi 16 et exerce une contrainte sur les ouvertures 32 du tapis 14 par l'intermédiaire des charnières 20, un bord arrière 40 du tapis 14 est relié à une barre de seuil 42 du coffre par l'intermédiaire d'au moins un moyen de maintien amovible 44.

Le moyen de maintien 44 est constitué par un anneau 46 monté pivotant autour d'un axe transversal 48 porté la barre de seuil 42, entre une première position de repos dans laquelle il est relevé et une position d'utilisation dans laquelle l'anneau 46 est inséré dans un logement 50, de forme complémentaire, ménagé dans une pièce 52 portée par le bord arrière 40 du tapis 14.

En outre, la pièce 52 comporte un plot 54, situé à l'intérieur du logement 50. Le plot 54 n'est pas en contact avec l'anneau 46 dans une situation normale. Cependant, si l'on essaye de soulever le tapis 14, ou bien en cas de freinage brusque du véhicule entraînant un début de soulèvement de la partie arrière 38 du tapis 14, le plot 54 va alors entrer en contact avec l'anneau 46 ce qui va empêcher le tapis 14 de soulever complètement et de ce fait, le basculement du dispositif de compartimentage.

Tel que représenté à la figure 4, le tapis 14 est monté pivotant autour d'un axe transversal 56, situé en avant de la paroi 16. Ainsi, après avoir détaché les moyens de maintien 44, c'est-à-dire après avoir relevé les anneaux 46, il est possible de soulever le tapis 14 pour accéder à des éléments situés sous le plancher 15, tels qu'une roue de secours, par exemple (non représentée).

Il est possible de soulever la partie arrière 38 du tapis quelle que soit la position de la paroi transversale 16, relevée ou non.

Une encoche 58, située à la périphérie du logement 50, permet de faciliter la préhension de l'anneau 46.

Ainsi l'agencement d'un dispositif de compartimentage selon l'invention présente l'avantage d'être facile à utiliser et de permettre l'accès à la roue de secours, ou d'autres éléments, malgré la présence de la paroi de compartimentage.

Il s'agit de plus d'un système simple et sûr, ne risquant pas de basculer, même en cas de freinage brusque du véhicule.

## Revendications

1. Agencement d'un dispositif de compartimentage (10) dans un coffre (12) de véhicule automobile, comportant un tapis (14) recouvrant au moins en partie un plancher (15) du coffre (12) et une paroi de compartimentage (16) montée mobile sur le tapis (14) par l'intermédiaire de charnières (20) entre une position de repos dans laquelle elle escamotée contre le plancher 15 et une position d'utilisation dans laquelle elle est relevée dans un plan transversal, **caractérisé en ce que** l'agencement comporte des moyens de maintien amovibles (44) d'un bord arrière (40) du tapis (14) sur une barre de seuil (42) du coffre (12), de manière à éviter le soulèvement d'une partie arrière (38) dudit tapis (14).

2. Agencement d'un dispositif de compartimentage (10) selon la revendication précédente, **caractérisé en ce que** les moyens de maintien (44) sont constitués par au moins un anneau (46), monté pivotant autour d'un axe transversal (48) porté par la barre de seuil (42) et apte à occuper une première position relevée et une deuxième position rabaissée dans laquelle il est inséré dans un logement (50) de forme complémentaire porté par une pièce (52) fixée sur le bord arrière (40) du tapis (14), ladite pièce (52) comportant en outre, à l'intérieur du logement (50), un plot (54), de manière que, en cas de soulèvement intempestif du bord arrière (40) du tapis (14), le plot (54) vienne en appui contre l'anneau (46) pour limiter le soulèvement dudit tapis (14).

3. Agencement d'un dispositif de compartimentage (10) selon la revendication précédente, **caractérisé en ce qu'**une encoche (58) de préhension de l'anneau (46) est portée par un bord du logement (52).

4. Agencement d'un dispositif de compartimentage (10) selon la revendication 1, **caractérisé en ce que** les charnières (20) sont des charnières en col de cygne dont une première extrémité (22) est reliée à la paroi de compartimentage (16) et dont une deuxième extrémité (24) est montée à rotation autour d'un axe transversal (26) porté par un support (28), fixé à une face inférieure (30) du tapis (14) et situé en regard d'une ouverture (32) de passage de la charnière (20), ménagée dans ledit tapis (14).

5. Agencement d'un dispositif de compartimentage (10) selon l'une quelconque des revendications précédentes, **caractérisé en ce que** le tapis (14) comporte un évidement (36) apte à recevoir la paroi de compartimentage (16) en position de repos, de manière que ledit tapis (14) et ladite paroi (16) forment une surface sensiblement plane.

6. Agencement d'un dispositif de compartimentage (10) selon l'une quelconque des revendications précédentes, **caractérisé en ce qu'**il comporte des moyens de blocage de la paroi de compartimentage (16) en position relevée.

7. Agencement d'un dispositif de compartimentage (10) selon l'une quelconque des revendications précédentes, **caractérisé en ce que** le tapis (14) est monté pivotant autour d'un axe transversal (56) situé en avant de la paroi de compartimentage (16), de manière que des éléments localisés sous le tapis (14) soient accessibles.
